# EUROPEAN PATENT SPECIFICATION

(11) **EP 4 420 842 B1**
(45) Date of publication and mention of the grant of the patent: **22.04.2026**
(21) Application number: 24158960.5
(22) Date of filing: 21.02.2024
(51) Int. Cl.: B25J 11/00, B21J 15/14, B25J 9/16, B25J 15/02, B25J 19/02, B64C 1/06, B64F 5/10, B25J 17/02, B25J 13/08, B25J 15/00

(54) **AUTOMATED CLAMP**
AUTOMATISCHE KLEMME
PINCE AUTOMATISÉE

(30) Priority: 24.02.2023 GB 202302659
(43) Date of publication of application: 28.08.2024
(73) Proprietor: Airbus Operations Limited, Bristol BS34 7PA (GB); The Manufacturing Technology Centre Limited, Coventry CV7 9JU (GB)
(72) Inventor: MOORE, Ian, Bristol, BS34 7PA (GB); CANTLE, David, Coventry, CV7 9JU (GB); FOSTER, Matthew, Coventry, CV7 9JU (GB); EDWARDS, Dan, Hawarden, CH5 3SY (GB)
(74) Representative: Worthington, Richard Easton

(56) References cited:
- EP-A2- 3 106 270
- DE-U1- 202019 000 040
- GB-A- 2 590 653
- US-A- 4 132 318
- US-A1- 2018 283 842
- US-A1- 2021 339 888
- US-B2- 10 537 993

## Description

### FIELD OF THE INVENTION

The present invention relates to an automated clamp, and a method of automatically clamping components of an aircraft assembly together using the automated clamp.

### BACKGROUND OF THE INVENTION

In a traditional aircraft wing box, each rib is bolted to the upper and lower covers and to the front and rear spars. Assembly of such a wing box can be time-consuming and complicated due to the need to manufacture, drill, shim, and then bolt many components together.

Improved efficiency of aircraft assembly is a continual target, with 'one way assembly' shown to be a particularly effective approach. One-way assembly involves the drilling and fastening of an assembly without an intermediate step of disassembly after drilling and prior to fastening. If a clamping force is not applied then one way assembly is typically not practical, as inter-laminar burring may occur during drilling and necessitate the disassembly and cleaning before reassembly and final fastening.

To enable one way assembly of the aircraft wing, the respective aircraft components (e.g. ribs, spars, and rib feet/posts therebetween) need to be drilled and fastened together without removing the clamping force pressing them together.

If any one component of the primary wing structure cannot be assembled by this one-way assembly process, then the benefit of reducing build time cannot be realised. Yet the scale and geometry of the aircraft wing prevents many challenges in realising one-way assembly. EP3106270A2 discloses compliant end effectors, robots that include compliant end effectors, and methods of utilizing the same. US2018/283842A1 discloses a sensor apparatus including a main body, counter body movable relative to the main body, and a plurality of sensor devices for the output of sensor signals, the sensor devices each including at least one sensor and at least one target area. GB2590653A discloses a clamp having a pair of openable and closeable jaws for clamping either side of a stack of components. US4132318A discloses a computer-controlled-manipulator gripper with a set of three-degree-of-freedom force sensors on each finger having strain gauges. US2021/339888A1 discloses an automated clamp including a clamp frame, motorised clamp jaws, and a robot end effector connector. DE202019000040U1 discloses flexible gripper jaws for oval or elliptical shapes, characterized in that: the ball heads in the gripper jaws adapt spatially to the contour of a non-circular workpiece at several points and thereby enable flexible positive and non-positive clamping. US10537993B2 discloses an apparatus for surface finishing including a robot and an end effector.

### SUMMARY OF THE INVENTION

A first aspect of the invention provides an automated clamp according to claim 1.

With this arrangement, the clamp jaws are able to clamp flush against the aircraft assembly, ensuring that the contact surface of the jaw(s) is parallel to the surface to be clamped. This correction of any misalignment may subsequently be used to determine a rotation of the clamp to bring the whole automated clamp into alignment, not just the nose-piece.

The bearing surface may be formed between a spherical end surface of the jaw body and a spherical end surface of the nose-piece

The clamp jaws may comprise two or more flexible elements configured to bias the nose-piece towards the jaw body.

The contact normalisation system may comprise a processing unit and one or more contact sensors configured to send a signal to the processing unit indicative of an angular rotation of the nose-piece relative to the jaw body.

With this arrangement, the automated clamp is provided with a means of determining the misalignment between the nose-piece and jaw body so that autocorrection can be undertaken.

The contact sensors may be fixed to the jaw body, and the contact sensors may be arranged to contact the nose-piece and send a signal to the processing unit indicative of an angular rotation of the nose-piece relative to the jaw body.

The one or more contact sensors may each be housed within the jaw body.

The contact normalisation system may comprise two or more of the contact sensors fixed to the jaw body. The contact normalisation system may comprise three or more contact sensors.

The automated clamp may comprise a vision system, the vision system having one or more imaging devices for detecting a datum of the rib web, rib post, or rib foot.

The vision system may include a first imaging device fixed to the first arm and having a line of sight oriented at an acute angle to a longitudinal axis of the clamp jaws and/or the vision system may have a second imaging device fixed to the second arm and having a line of sight oriented at an acute angle to a longitudinal axis of the clamp jaws.

The first and/or second jaw may have a tool module docking aperture for receiving a tool module, the tool module docking aperture arranged to provide access to the rib web and rib post or rib foot clamped between the clamp jaws.

A second aspect of the invention provides a method of automatically clamping components of an aircraft assembly together using the automated clamp of any preceding claim, the method comprising: positioning the nose-piece into contact with a surface of the aircraft assembly such that the nose-piece rotates until a longitudinal axis of the nose-piece aligns with a normal vector of the surface; and rotating the jaw body relative to the nose-piece to align a longitudinal axis of the jaw body to the longitudinal axis of the nose-piece and the normal vector of the surface.

The method may comprise: sending a signal to the processing unit indicative of an angular rotation of the nose-piece relative to the jaw body to determine an angle of rotation; and rotating the jaw body relative to the nose-piece in accordance with the determined angle of rotation.

The method may comprise: moving the first jaw a predetermined distance away from the aircraft assembly; calibrating the vision system relative to the aircraft assembly based on the predetermined distance; and identifying a datum on the aircraft assembly with the vision system.

The method may comprise: moving the second arm towards the first arm to clamp the aircraft assembly between the clamp jaws.

The method may comprise: inserting a drilling tool module into the tool module docking aperture and drilling a hole through the clamped aircraft assembly; removing the drilling tool module from the tool module docking aperture; inserting a fastening tool module into the tool module docking aperture to fasten the aircraft assembly; and moving the second arm away from the first arm to unclamp the aircraft assembly.

The aircraft assembly may comprise a rib web and a rib post of an aircraft wing box and/or a rib web and a rib foot of an aircraft wing box.

### BRIEF DESCRIPTION OF THE DRAWINGS

Embodiments of the invention will now be described with reference to the accompanying drawings, in which:
Figure 1 shows a perspective view of a fixed wing aircraft;
Figure 2 shows a schematic plan view of a starboard wing box and centre wing box;
Figure 3 shows a partial cross sectional side view of a forward end of the wingbox, showing the rib web, rib post and integrated rib feet;
Figure 4 shows a partial perspective view of a wing cover with integral stringers, integrated rib feet and the rib web;
Figure 5 shows an automated clamp system;
Figure 6 shows a perspective view of an automated clamp of the clamp system;
Figure 7 shows an alternative perspective view of the automated clamp;
Figure 8 shows a first view of the clamp jaws;
Figure 9 shows a second view of the clamp jaws;
Figure 10 shows the first jaw attached to the first arm;
Figure 11 shows the second jaw attached to the second arm;
Figure 12 shows a first stage of the calibration procedure in which the first jaw is brought towards the aircraft assembly;
Figure 13 shows a second stage of the calibration procedure in which the nose-piece of the first jaw contact the aircraft assembly;
Figure 14 shows a third stage of the calibration procedure in which the jaw body of the first jaw is rotated to align with the nose-piece;
Figure 15 shows a fourth stage of the calibration procedure in which the first jaw is moved back from the aircraft assembly by a predetermined distance;
Figure 16 shows a fifth stage of the calibration procedure in which the first jaw has been moved into contact with the aircraft assembly;
Figure 17 shows a sixth stage of the calibration procedure in which the second jaw is moved so as to clamp the aircraft assembly between the clamp jaws;
Figure 18 shows a cross-sectional view of the clamp jaws.

### DETAILED DESCRIPTION OF EMBODIMENT(S)

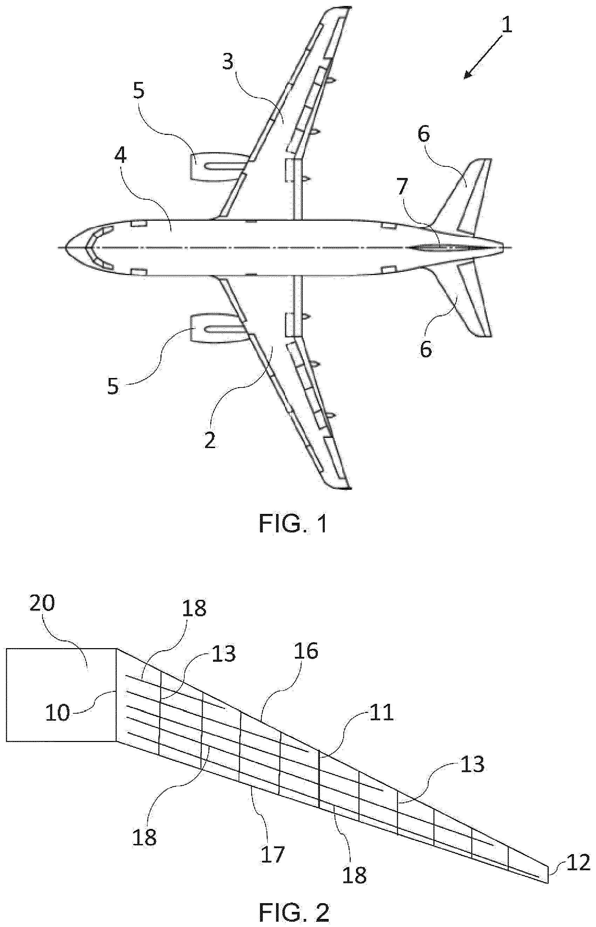

Figure 1 illustrates a typical configuration for a fixed wing passenger transport aircraft 1. The aircraft 1 comprises port and starboard wings 2, 3 extending from a fuselage 4, engines 5, horizontal tailplane 6 and vertical tailplane 7. It will be appreciated that this invention is applicable to a wide variety of aircraft types not just that illustrated in Figure 1. For example, the aircraft may be for commercial or military purposes, may be for transporting passengers or cargo, may have jet, propeller or other engine propulsion systems, may have a variety of fuselage/wing configurations, e.g. a high wing, low wing, or blended wing body, and may be designed to fly at subsonic, transonic or supersonic speeds. Although the present invention is described by reference to a wing, it will be understood that the present invention may be applicable to other aerofoil shaped bodies, such a tail planes.

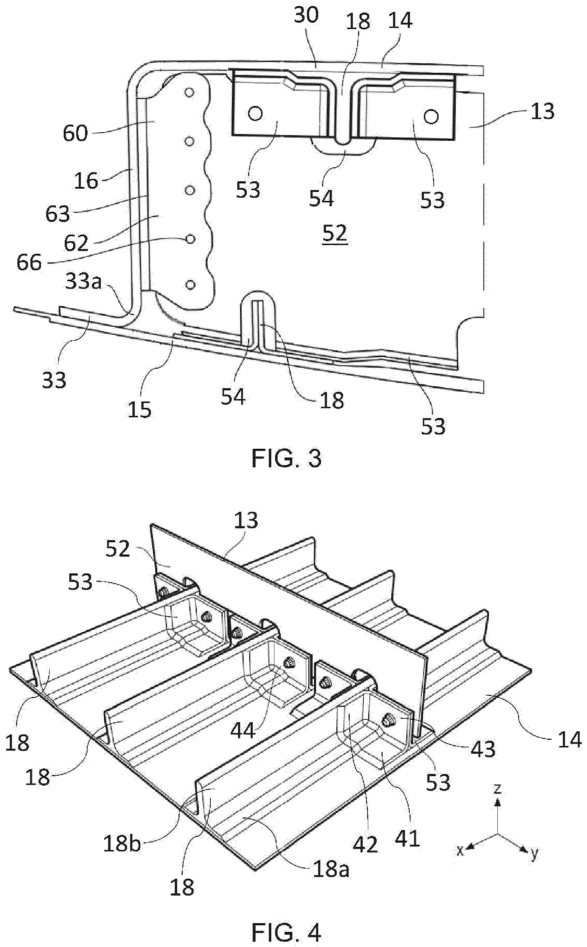

Each wing 2, 3 is formed as an aerofoil shaped body. Each wing has a cantilevered structure with a length extending in a spanwise direction from a root to a tip, the root being joined to an aircraft fuselage 4. Similarly, the horizontal and vertical tail planes 6, 7 are similarly arranged. Each wing 2, 3 includes a torsion box, otherwise known as a wing box. The wings 2, 3 are similar in construction so only the starboard wing 2 will be described in detail with reference to Figures 2 and 3.

The main structural element of the wing is a wing box formed by upper and lower covers 14, 15 and front and rear spars 16, 17. The covers 14, 15 and spars 16, 17 are each Carbon Fibre Reinforced Polymer (CFRP) laminate components. Each cover has an aerodynamic surface (the upper surface of the upper cover 14 and the lower surface of the lower cover 15) over which air flows during flight of the aircraft. Each cover also has an inner surface carrying a series of stringers 18 extending in the spanwise direction. Each cover carries a large number of stringers 18, only five of which are shown in Figure 2 for purposes of clarity. Each stringer 18 is joined to one cover but not the other.

The wing box also has a plurality of transverse ribs, each rib being joined to the covers 14, 15 and the spars 16, 17. The ribs include an inner-most inboard rib 10 located at the root of the wing box, and a number of further ribs spaced apart from the inner-most rib along the length of the wing box. The wing box is divided into two fuel tanks: an inboard fuel tank bounded by the inboard rib 10, a mid-span rib 11, the covers 14, 15 and the spars 16, 17; and an outboard fuel tank bounded by the mid-span rib 11, an outboard rib 12 at the tip of the wing box, the covers 14, 15 and the spars 16, 17.

The inboard rib 10 is an attachment rib which forms the root of the wing box and is joined to a centre wing box 20 within the body of the fuselage 4. Baffle ribs 13 (shown in dashed lines) form internal baffles within the fuel tanks which divide the fuel tanks into bays. The ribs 10, 11, 12 are sealed to prevent the flow of fuel out of the two fuel tanks, but the baffle ribs 13 are not sealed so that fuel can flow across them between the bays. As can be seen in Figure 2, the stringers 18 stop short of the inboard rib 10 and the outboard rib 12 but pass through the baffle ribs 13 and the mid-span rib 11.

Figure 3 shows a cross sectional partial side view of a forward end region of the wing 2 of the aircraft 1. In the illustrated example, the wing 2 comprises a spar-cover 30 comprising the upper cover 14 and the front spar 16. The spar-cover 30 includes a lower spar flange 33 extending from the front spar 16 via a curved profile 33a and integrally formed with the front spar 16. The spar-cover 30 is an integrally formed, monolithic component comprising the upper cover 14, the front spar 16, and the lower spar flange 33. However, it will be appreciated that in other examples the spar, cover, and flanges may be separate. The lower spar flange 33 acts as an attachment flange for mounting with the lower cover 15. The spar-cover 30 comprises fibre reinforced matrix composite laminate material, such as carbon fibre reinforced polymer. As can be seen from Figure 3, the spar-cover 30 is substantially Z-shaped. Although it will be appreciated that other arrangements may be adopted. The rear spar 17 (not shown in Figure 3) may be substantially C-shaped with upper and lower attachment flanges for joining to the upper and lower covers 14, 15, respectively. In another arrangement, the spar-cover may be substantially Omega-shaped so as to comprise the one of the covers, and both the front and rear spars, with front and rear attachments flanges for joining to the other of the covers.

The rib 13 extends in a chordwise direction of the wing box. The rib 13 extends between the front spar 16 and the rear spar 17, and between the upper cover 14 and lower cover 15. The rib 13 is joined to the front spar 16 by a rib post 60. The rib post 60 at the forward end attaches the rib 13 to the front spar 16. A corresponding rib post 60 at the rearward end of the rib 13 attaches the rib to the rear spar 17. One or more of the rib posts 60 may be integrally formed with the rib 13. The rib 13 comprises fibre reinforced matrix composite laminate material, such as carbon fibre reinforced polymer (CFRP). Although components are described herein as being formed from fibre reinforced matrix composite laminate material, such as carbon fibre reinforced polymer, it will be understood that alternative materials may be used.

The rib 13 includes a rib web 52. The rib web 52 defines the general plane of the rib 13. Rib feet 53 mount the rib 13 to the upper and lower covers 14, 15. The rib feet 53 adjacent the lower cover 15 are shown in Figure 3 as integrally formed with the rib web 52. However, the rib feet 53 adjacent the upper cover 14 are shown in Figure 3 as integrated with the upper cover 14 and the upper cover stringers 18, and are attached to the rib web 52, e.g. by bolting. The rib feet 53, stringers 18 and other components may be attached or co-cured to the upper and lower covers 14, 15 in various configurations.

The stringers 18 are of conventional type and so will not be described in further detail. The stringers 18 reinforce the covers, acting as spanwise extending reinforcing members, which are attached or integrally formed with the inside of the covers 14, 15. The stringers 18 extend through mouseholes 54 in the rib 13.

This invention particularly concerns the automated joining of the rib web 52 to the rib post(s) 60 and the rib feet 53 during construction of the wing box.

The rib post 60 includes a rib post web 62 and a rib post foot 63. The rib post web 62 upstands from the rib post foot 63. The rib post foot 63 extends either side of the rib post web 62. The rib post 60 is substantially T-shaped, however it will be understood that alternative shapes are possible, for example L-shaped. The rib post web 62 extends transversely from the rib post foot 63. The rib post web 62 is fixedly mounted to the rib web 52. Fasteners 66 fix the rib post web 62 with the rib web 52. The fasteners 66 are conventional and may include rivets and/or bolts. The rib post web 62 overlaps the rib web 52 and is fixed in an overlapping arrangement.

Figure 4 shows part of the upper cover 14 including three stringers 18. The rib 13 comprises a planar rib web 52 connected to the upper cover by a plurality of CFRP laminate rib feet 53 - six of such rib feet being shown in Figure 4. Each rib foot 53 is formed by two mirror-symmetrical parts positioned back-to-back. Each part has a generally horizontal first flange 41; an upstanding second flange 42; and an upstanding web 43 positioned back-to-back with the web of the other part (these webs 43 being joined together back-to-back by a co-cured joint).

The first flange 41 of the rib foot may be co-cured to the stringer flange 18a and inner surface of the cover 14. This co-cured joint (without bolts) between the rib foot flange 41 and the cover 14 means that no drilled bolt holes need to be provided in the cover. The second flange 42 may be co-cured to the stringer web 18b, and the web 43 of the rib foot joined to the rib web 52 by fasteners 44. The fasteners 44 are conventional and may include rivets and/or bolts. The rib foot web 43 overlaps the rib web 52 and is fixed in an overlapping arrangement.

Joining the rib web 52 to the rib foot web 43 and/or to the rib post web 62 will now be described.

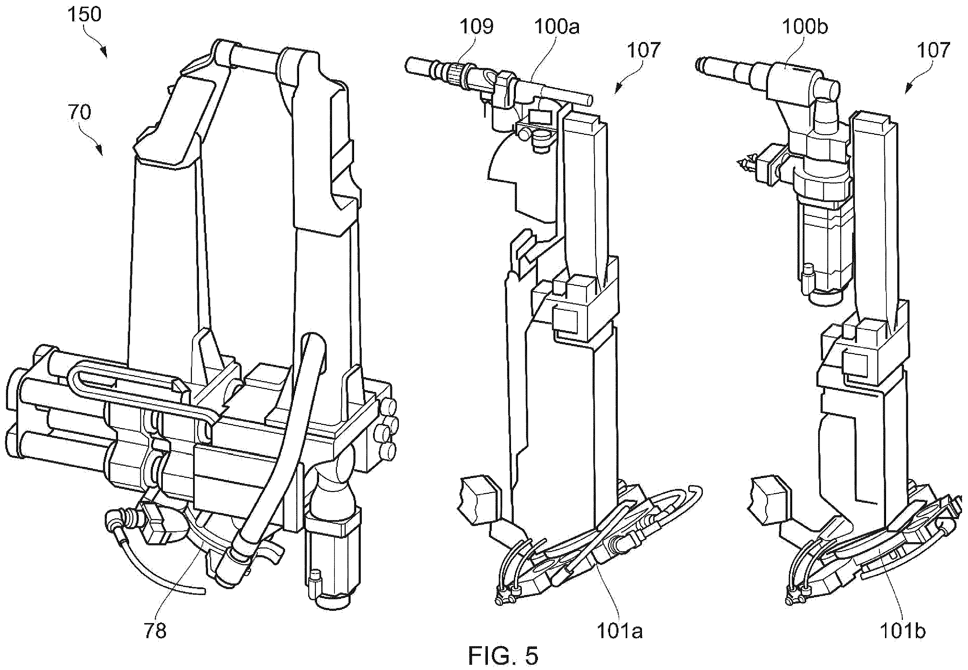

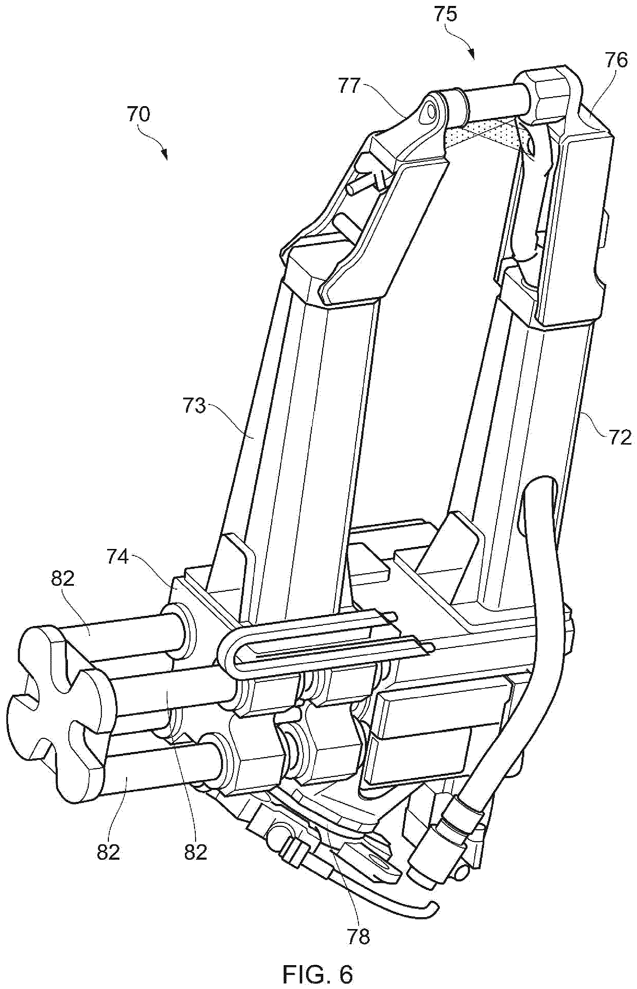

Figure 5 shows part of a clamp system 150 including an automated clamp 70 shown in further detail in Figure 6. The clamp 70 has a clamp frame 71. The clamp frame 71 includes a first arm 72 and a second arm 73 that extend from a base 74 of the clamp frame 71. The first and second arms 72, 73 extend in generally parallel and in the same direction such that the clamp 70 is generally 'U' shape. The second arm 73 is moveably mounted to the base 74 of the clamp frame 71 so as to be moveable towards and away from the first arm 72. The first arm 72 is fixed relative to the base 74.

The clamp 70 has clamp jaws 75 for clamping either side of an aircraft assembly 50, for example clamping the rib web 52 to the rib post 60, or the rib web 52 to the rib foot 53. The clamp jaws 75 include first and second jaws 76, 77. The first jaw 76 is fixed at a distal end of the first arm 72, relative to the proximal end of the first arm 72 at the base 74. The second jaw 77 is fixed at a distal end of the second arm 73, relative to the proximal end of the second arm 73 at the base 74. The distance between the arms 72, 73 may be sufficient to clear around rib feet 53 of the rib 13 during positioning of the clamp 70, with a margin for robot position tolerance and fixture position tolerance.

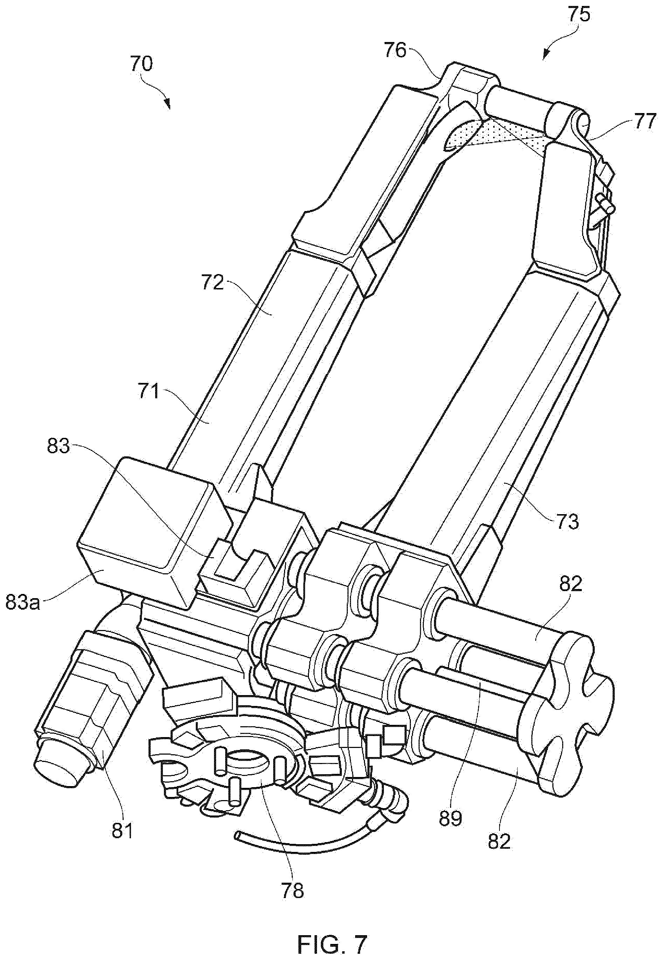

The second arm 73 is mounted on a set of linear guides 82 (e.g. linear rail) for linear movement of the second arm 73 with respect to the clamp frame 71 to open and close the clamp jaws 75. The set of linear guides 82 may include one or more linear guides 82, with the example shown in Figure 6 having four linear guides 82. The clamp 70 includes a motor 81 (and accompanying gearbox) that has a rotational axis oriented perpendicular to the linear guides 82 and drives the second arm 73, e.g. along a ball-screw mechanism 89 as shown in Figure 7, towards and away from the first arm 72.

A robot end effector connector 78 is coupled to the clamp frame 71, for example to the base 74 of the clamp frame 71. The end effector connector provides physical and electrical coupling of the clamp 70 to a robot as part of a clamp system 150. The robot end effector connector 78 provides detachable connection to the robot. Alternatively, the robot end effector connector 78 may provide a permanent connection between the clamp 70 and the robot.

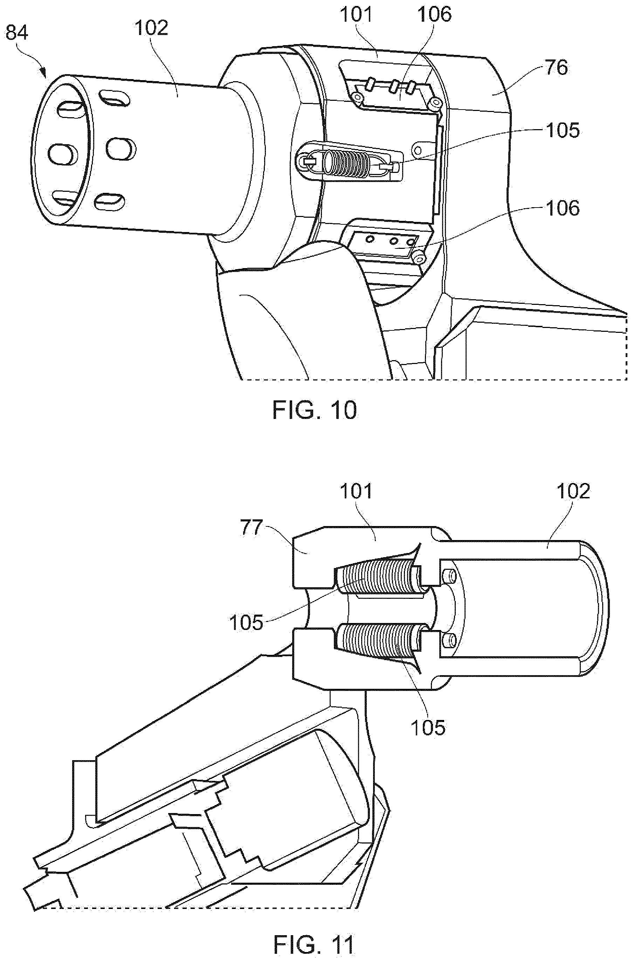

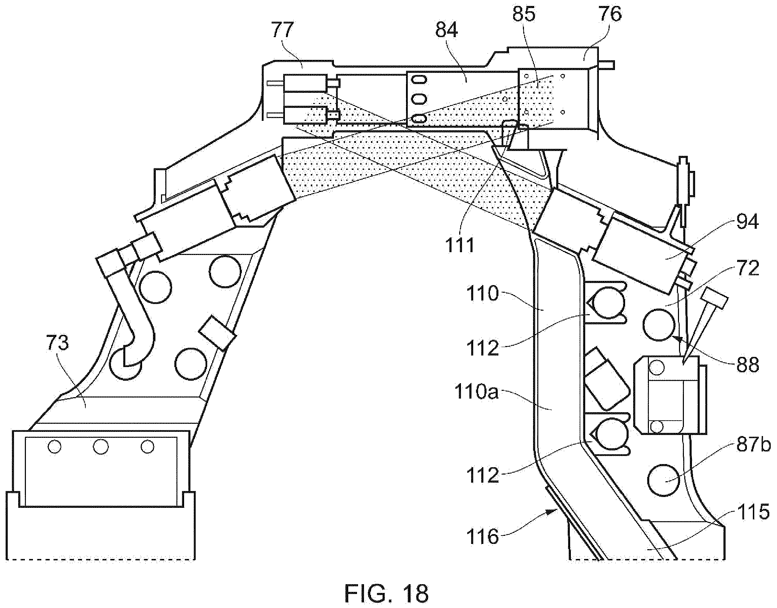

The first clamp jaw 76 includes a tool module docking aperture 84 configured to receive a tool module and through which a drilling tool or a fastening tool are individually insertable, see Figure 10. The aperture 84 is a through-hole configured to receive an expanding collet 109 of the tool module and may include a collet bore 85 arranged to releasably fix the tool module in position in the aperture 84 relative to the clamp frame 71 (See Figure 18). The tool module may be a drilling module 100a having a drilling tool, or a fastening module 100b having a fastening tool (See Figure 5). The drilling tool may carry a drill bit. The drilling tool may be received by the aperture 84 in the first clamp jaw 76, e.g. the drilling tool may be captured in the collet bore 85. The fastening tool may be received by the aperture 84 in the first clamp jaw 76, e.g. the fastening tool may be captured in the same collet bore 85 as the drilling tool in a sequential operation.

The aperture 84 allows access of the drilling tool and fastening tool to the aircraft assembly 50, such that the tool is extendable through the aperture 84 towards the aircraft assembly 50.

Each of the tool modules 100a, 100b is connected to an end effector 107 that has a respective robot end effector connectors 101a, 101b providing physical and electrical connection between the tool module 100a, 100b and a second robot. The tool module 100a, 100b is mainly supported by the second robot and not by the aperture 84 in the clamp 70.

The clamp 70 has a size and geometry suitable for extending either side of the rib web 52, such that the arms 72, 73 are at least as long as the rib web 52 being assembled, whilst providing a construction stiff enough to deliver sufficient clamping force on the aircraft assembly 50. The clamp 70 is therefore relatively large yet is expected to operate in a space that is relatively restricted and difficult to access. Consequently, there is a need to tightly package the clamp 70 so as to minimise its size, particularly at the clamp jaws 75.

To reduce the size of the clamp 70 towards the jaw 75 end of the clamp 70, the jaws 76, 77 are moveable from the base 74 of the clamp frame 71 such that the whole of each arm 72, 73 move relative to the other rather than only the jaws 76, 77 moving relative to one another. This creates challenges in ensuring the arms 72, 73 do not clash with components positioned between the arms 72, 73 (i.e. components between the arms 72, 73 and below the jaws 76, 77), however avoiding the positioning of motors, gearing and other means at the clamp jaws 75 is considered to offset these drawbacks.

Further to this, the design constraints on the linear guides 82 are reduced. Consequently, the gearbox and motor 81 can be larger so as to provide greater torque or accuracy. The linear guides 82 can be larger, and thereby more rigid, whilst multiple linear guides 82 can also be fitted onto the clamp 70. These features can all improve the stability of the second arm 73 relative to the first arm 72.

The loads resulting from the clamp jaws 75 impacting the aircraft assembly 50 can also be resolved by a loads monitoring device 83 positioned at the base 74 of the clamp frame 71 rather than requiring any loading monitoring device to be placed on the arms 72, 73 or adjacent the clamp jaws 75. For example, Figure 7 shows a load cell 83a located at an end of the ball-screw mechanism 89.

The reduced design constraints can allow the linear guides 82 to be longer compared to what otherwise might be possible, allowing additional relative movement between the jaws 76, 77.

The robot end effector connector 78 is positioned on the base 74 of the clamp 70, so that the robot can be positioned as far from the clamp jaws 75 as possible. In particular, Figure 7 shows an example in which the robot end effector connector 78 is positioned on an opposite side of the base 74 to the arms 72, 73, such that the robot arm attachable to the robot end effector connector 78 extends away from the clamp 70.

The clamp 70 includes a vision system 93 for accurate final positioning of the clamp 70. The vision system 93 operates by detecting a datum feature of the component(s) to be clamped (e.g. a hole or edge of the component) and determining a datum from this datum feature.

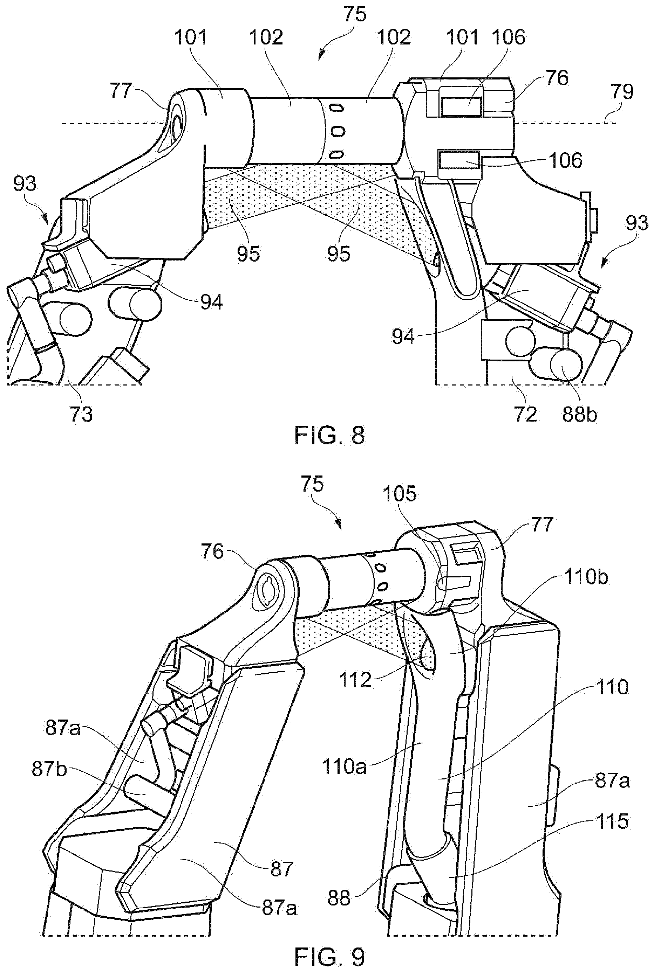

The datum acts as a reference point from which the clamp 70 is moveable such that accurate positioning of drilling and fastening operations is achieved. The vision system 93 may include one or more imaging devices 94 (e.g. cameras) that are fixed to a respective arm 72, 73. Figure 8 shows a first imaging device 94 fixed to the first arm 72 and a second imaging device 94 fixed to a second arm 73. The imaging devices 94 have a line of sight 95 directed towards the other of the arms 72, 73, such that the first imaging device 94 has a line of sight 95 directed towards the second arm 73 and the second imaging device has a line of sight 95 directed towards the first arm 72. In this manner, the imaging devices 94 have a line of sight 95 that is directed towards the aircraft assembly 50 being clamped between the jaws 75.

Due to the space constraints of the clamp 70, each arm 72, 73 of the clamp 70 has only one imaging device 94, and each imaging device 94 is positioned below the clamp jaws 75. The imaging devices 94 field of view is concentrated generally towards the jaws 75, such that the line of sight 95 of the imaging device 94 is at an acute angle to the longitudinal axis 79 of the clamp jaws 75 (e.g. at an angle of around 30 degrees).

Due to the use of a single imaging device 94 on each side of the aircraft assembly 50, as well as the acute angle of the imaging device 94 relative to the longitudinal axis 79 of the jaws 75, the vision system 93 may be unable to determine the distance between the aircraft assembly 50 and the respective clamp jaw 76, 77, and is therefore unable to detect a suitable datum.

To account for this, the clamp 70 performs a calibration procedure using a contact normalisation system of the jaw 76, 77 to calibrate the distance of each imaging device 94 from the surface of the aircraft assembly 50. This allows an accurate datum to be determined.

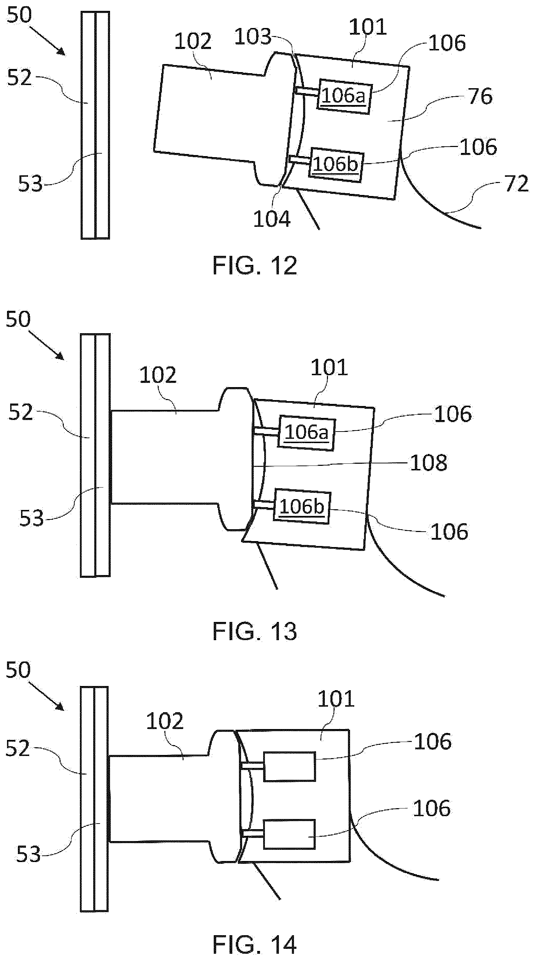

The contact normalisation system includes a jaw body 101 fixed relative to the first arm 72, and a nose-piece 102 rotatably coupled to the jaw body 101. The nose-piece 102 and jaw body 101 contact at a bearing surface therebetween, with the bearing surface formed between a spherical end surface 103 of the jaw body 101 and a spherical end surface 104 of the nose-piece 102 (See Figures 12 to 17).

The contact at the bearing surface is low friction, such that the nose-piece 102 effectively floats relative to the jaw body 101, with one or more flexible elements 105 (e.g. springs) that extend between the jaw body 101 and the nose-piece 102 arranged to bias the nose-piece towards the jaw body 101 whilst still allowing relative rotation.

In this manner, the contact normalisation system allows the nose-piece 102 to orient itself flush against the aircraft assembly 50 regardless of the relative orientation of the jaw body 101 fixedly attached to the first arm 72. The misalignment between the longitudinal axis of the jaw body 101 and the nose-piece 102 can then be used as a guide to orient the clamp frame 71.

It will be appreciated that the second arm 73 may similarly have a contact normalisation system, such as described (e.g. see Figure 11). In this example, the flexible elements 105 are housed within the jaw body 101 of the second jaw 77.

The contact normalisation system may include one or more contact sensors 106 arranged to send a signal to a processing unit that is indicative of the angular rotation of the nose-piece 102 relative to the jaw body 101, i.e. the misalignment between the longitudinal axes of the nose-piece 102 and jaw body 101. In the example shown in Figure 10, the contact normalisation system comprises four contact sensors 106 arranged evenly about the longitudinal axis of the jaw body 101.

The relative size of the contact sensors 106 allows each of the contact sensors 106 to be housed within the jaw body 101, thereby minimising the space envelope at the clamp jaw 75 end of the clamp frame 71.

The calibration procedure will now be described with reference to Figures 12 to 17.

The robot moves the automated clamp 70 towards an aircraft assembly 50 to be clamped. Figure 12 shows part of a rib web 52 and a rib foot 53, although it will be appreciated that other components may be clamped, such as the rib web 52 to the rib post 60. The clamp frame 71 is moved so as to straddle the rib web 52 such that each arm 72, 73 of the clamp frame 71 is on an opposing side of the aircraft assembly 50.

The nose-piece 102 of the first jaw 76 is brought towards the aircraft assembly 50 so as to come into contact with the surface of the aircraft assembly 50. Typically, the longitudinal axis of the nose-piece 102 will be misaligned with the normal vector of the surface, such that the nose-piece 102 rotates into alignment with the normal vector (See Figure 13) and out of alignment with the longitudinal axis of the jaw body 101.

The contact sensors 106 fixed to the jaw body 101 contact the nose-piece 102 and send a signal to the processing unit indicative of the angular rotation. In particular, the contact sensors 106 remain in contact with a planar end surface 108 of the nose-piece 102. In the present example, the planar end surface 108 is surrounded circumferentially by the spherical end surface 104, although it will be appreciated that other arrangements may be provided.

The distance between the planar end surface 108 and each contact sensor 106 changes in proportion to the degree of angular rotation of the nose-piece 102. In comparing the contact normalisation system shown in Figure 12 and 13, the planar end surface 108 in Figure 13 is shown to move closer to a body of the first contact sensor 106a whilst the planar surface 108 is shown to move further away from a body of the second contact sensor 106b.

It will be appreciated the contact sensors 106 may be able to detect the rotation of the nose-piece when in contact with other surfaces that are non-planar, e.g. a non-spherical surface.

The contact sensors 106 send a signal to a processing unit in accordance with the displacement of the nose-piece 102 measured by the contact sensors 106. The signals are indicative of the angular rotation of the nose-piece 102, with the use of at least two contact sensors 106 allowing the angular rotation of the nose-piece 102 to be determined about the two axes perpendicular to the longitudinal axis of the jaw body 101.

The jaw body 101 is then rotated relative to the nose-piece 102 via movement of the clamp frame 71 coupled to robot end effector connector 78. The rotation is such that the longitudinal axis of the jaw body 101 is aligned with the longitudinal axis of the nose-piece as well as the normal vector of the surface of the aircraft assembly 50. The rotation of the jaw body 101 relative to the nose-piece 102 equals the angle of rotation determined by the processing unit based on the signals from the contact sensors 106.

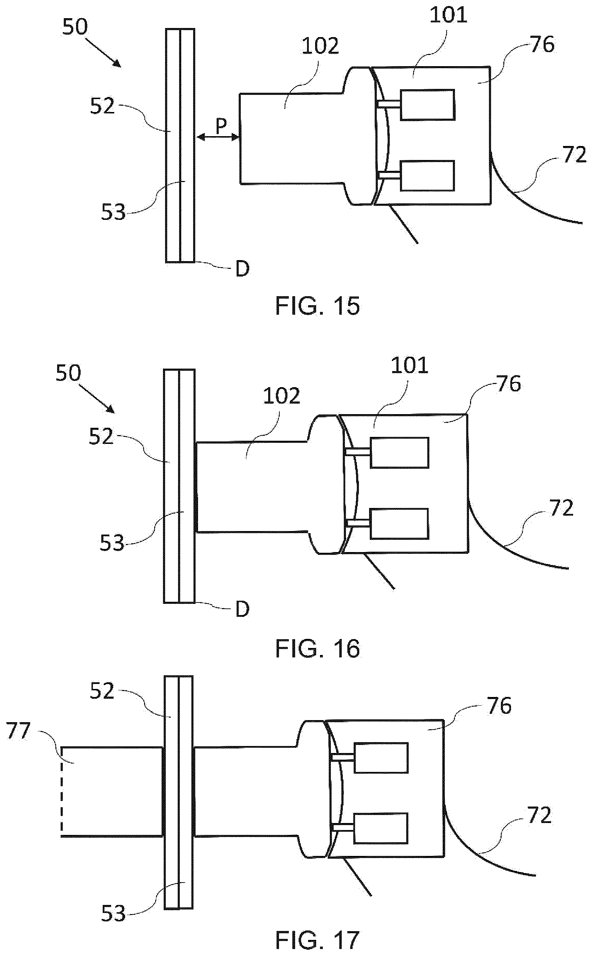

At this point, the automated clamp system 150 identifies a datum D using the vision system 93 (for example the datum D may be an edge of the aircraft assembly 50 such as shown in Figure 15). As previously discussed, the use of a single imaging device 94 having a line of sight 95 angled relative to the longitudinal axis 79 of the jaws 75 results in the vision system 93 being unable to determine the distance between each side of the aircraft assembly 50 and the respective clamp jaw 76, 77, and therefore unable to detect a suitable datum.

To resolve this issue, the clamp frame 71 (specifically the first jaw 76) is moved a predetermined distance P away from the aircraft assembly 50 - Figure 15. This allows the vision system 93 to calibrate itself relative to the aircraft assembly 50 so that a datum of the aircraft assembly 50 can be accurately identified.

The clamp 70 is then moved into an assembly position that aligns the tool module docking aperture 84 with a location to be drilled/fastened (See Figure 16). Upon alignment with the assembly position, the first jaw 76 is once again brought towards the aircraft assembly so that the nose-piece 102 contacts the surface of the aircraft assembly 50 - Figure 16. It is expected that the longitudinal axis of the jaw body 101 is aligned with the longitudinal axis of the nose-piece 102 and the normal vector of the surface, however the automated clamp system 150 may reconfigure the clamp frame 71 to ensure proper alignment.

The second arm 73 is then moved towards the first arm 72 so as to clamp the aircraft assembly 50 between the first and second jaws 76, 77 - Figure 17. The second jaw 77 may include a contact normalisation system that has a nose-piece 102 that rotates relative to a jaw body 101 in order to ensure the end of the nose-piece 102 is flush against the aircraft assembly 50.

A drilling tool module 100a is then inserted into the tool module docking aperture 84 and a hole drilled into the aircraft assembly 50. The drilling tool module 100a is retracted from the tool module docking aperture 84 and a fastening tool module 100b inserted into the tool module docking aperture 84 in order to fix the components together with a fastener (not shown).

In order to realise the advantages of one-way assembly, it is important that the clamping force is maintained during throughout the entire process, with the clamping force applied before drilling commences and is not removed until the components have been fastened together. This prevents swarf and other debris from entering any gap between the components of the aircraft assembly 50, as well as preventing any inter-laminar burring from forming between the components.

The second arm 73 can then be moved away from the first arm 72 to unclamp the aircraft assembly 50. The automated clamp 70 can then move to a new assembly position, either using the existing datum or by identifying a new datum using the calibration procedure.

Maintaining the clamping force during the assembly process helps to prevent the presence of swarf, debris and burring from between the components, however these manufacturing bi-products are still produced and this increases the chances of contamination. Moreover, the swarf and debris may still fall and rest within the wing box.

To address these issues, a swarf channel 110 is provided that extends into the tool module docking aperture 84 (See Figure 18). The swarf channel 110 is fluidically connected to a vacuum source such that a vacuum pressure is applied to extract waste material from inside the tool module docking aperture 84 and adjacent the aircraft assembly.

The swarf channel 110 enters into the tool module docking aperture 84 at a position between the collet bore 85 and the end of the first jaw 72 arranged to contact the surface of the clamped aircraft assembly 50. In particular, the inlet 111 is located at the bearing surface between the jaw body 101 and the nose-piece 102 so that a portion of the inlet 111 is formed in the jaw body 101 and a portion of the inlet 111 is formed in the nose-piece 102.

The swarf channel 110 extends from the inlet 111 and down the first arm 72 towards the base 74 of the clamp frame 71. The swarf channel 110 is located on an inner facing side of the first arm 72 facing the second arm 73. The swarf channel is releasably attached to the first arm 72 by clips 112. The clamp frame 71 is modular, with the clamp jaws 76, 77, imaging devise 94, and the swarf channel 110 each attached to mounting formation 87 of the respective arm 72, 73 (See Figure 9). Each mounting formation 87 includes opposing plates 87a separated by spacers 87b that define a housing 88 of the arm 72, 73. The swarf channel 110 is located at least partially in the housing 88 of the first arm 72.

The swarf channel 110 is connected to a flexible vacuum hose 115. The flexible vacuum hose 115 extends partly up the first arm 72 and connects to the swarf at a vacuum coupling 116.

In order to avoid disrupting the line of sight of the imagine device 94 of the first arm 72, the swarf channel 110 deviates from a direct, linear path from the flexible vacuum hose 115 (specifically the vacuum coupling 116) to the inlet 111 so as to curve around the line of sight of the imaging device 94.

In the example shown, the swarf channel 110 includes a main channel 110a and two sub-channels 110b. The sub-channels 110b are arranged in parallel and extend either side of the line of sight of the imaging device 94. The sub-channels 110b both converge to the main channel 110a at either end so as to define an aperture 112 through which the line of sight extends (as shown best in Figure 9). The sub-channels 110b each have a cross-sectional area approximately half of that of the main channel 110a, such that the overall cross-section of the swarf channel 110 is approximately constant along the fluidic path to the aperture 84.

To produce this complex shape, the swarf channel 110 may be formed by additive manufacturing (3D printing). The swarf channel 110 may be formed of plastic. The swarf channel 110 may be substantially rigid relative to the flexible vacuum hose 115.

The vacuum pressure is typically supplied through the swarf channel 110 during throughout the entire assembly process, with the vacuum supplied prior to drilling commences and maintained until the components have been fastened together. This helps to extract swarf and other debris from the tool module docking aperture 84.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. An automated clamp (70) for clamping a rib web (52) to a rib post (60) or rib foot (63) of an aircraft wing box, the clamp comprising:
a clamp frame (71) having a first arm (72) and a second arm (73) extending from the base (74) of the clamp frame, wherein the second arm is moveable towards and away from the first arm;
a robot end effector (101a) connector coupled to the clamp frame;
clamp jaws (75) including a first jaw (76) fixed at a distal end of the first arm, and a second jaw (77) fixed at a distal end of the second arm, the clamp jaws configured to clamp a rib web to a rib post or clamp a rib web to a rib foot;
wherein the first jaw and/or second jaw comprises a contact normalisation system, the contact normalisation system comprising:
a jaw body (101) fixed relative to the respective arm, and
a nose-piece (102) rotatably coupled to the jaw body at a bearing surface, the nose piece being configured to contact a surface of one of the rib web, rib post and rib foot, wherein the rotatable coupling of the nose-piece is configured to passively rotate the nose-piece relative to the jaw body upon contact with the surface, **characterised in that** the rotation of the nose-piece is about two axes perpendicular to a longitudinal axis of the jaw body.

2. The automated clamp (70) of claim 1, wherein the bearing surface is formed between a spherical end surface (103) of the jaw body (101) and a spherical end surface (104) of the nose-piece (102).

3. The automated clamp (70) of claim 2, wherein the nose-piece (102) comprises a planar end surface (108) surrounded circumferentially by the spherical end surface (104) of the nose-piece.

4. The automated clamp (70) of any preceding claim, wherein the clamp jaws (75) comprise two or more flexible elements (105) configured to bias the nose-piece (102) towards the jaw body (101).

5. The automated clamp (70) of any preceding claim, wherein the contact normalisation system comprises a processing unit and one or more contact sensors (106) configured to send a signal to the processing unit indicative of an angular rotation of the nose-piece (102) relative to the jaw body (101), preferably
wherein the contact sensors are fixed to the jaw body, the contact sensors arranged to contact the nose-piece and send a signal to the processing unit indicative of an angular rotation of the nose-piece relative to the jaw body.

6. The automated clamp (70) of claim 5, wherein the one or more contact sensors (106) are each housed within the jaw body (101).

7. The automated clamp (70) of any preceding claim, wherein the contact normalisation system comprises two or more of the contact sensors (106) fixed to the jaw body (101), and preferably three or more contact sensors.

8. The automated clamp (70) of any preceding claim, comprising a vision system (93), the vision system having one or more imaging devices (94) for detecting a datum (D) of the rib web (52), rib post (60), or rib foot (63), preferably wherein the vision system includes a first imaging device fixed to the first arm (72) and having a line of sight (95) oriented at an acute angle to a longitudinal axis of the clamp jaws (75) and/or the vision system has a second imaging device fixed to the second arm (73) and having a line of sight oriented at an acute angle to a longitudinal axis of the clamp jaws.

9. The automated clamp (70) of any preceding claim, wherein the first (76) and/or second jaw (77) has a tool module docking aperture (84) for receiving a tool module, the tool module docking aperture arranged to provide access to the rib web (52) and rib post (60) or rib foot (63) clamped between the clamp jaws (75).

10. A method of automatically clamping components of an aircraft assembly (50) together using the automated clamp (70) of any preceding claim, the method comprising:
positioning the nose-piece (102) into contact with a surface of the aircraft assembly such that the nose-piece rotates until a longitudinal axis of the nose-piece aligns with a normal vector of the surface; and
rotating the jaw body (101) relative to the nose-piece to align a longitudinal axis of the jaw body to the longitudinal axis of the nose-piece and the normal vector of the surface.

11. The method of claim 10 when dependent on claim 5, comprising:
sending a signal to the processing unit indicative of an angular rotation of the nose-piece (102) relative to the jaw body (101) to determine an angle of rotation; and
rotating the jaw body relative to the nose-piece in accordance with the determined angle of rotation.

12. The method of claim 10 or 11 when dependent on claim 8, comprising:
moving the first jaw (76) a predetermined distance away from the aircraft assembly (50);
calibrating the vision system (93) relative to the aircraft assembly based on the predetermined distance; and
identifying a datum (D) on the aircraft assembly with the vision system.

13. The method of any one of claims 10 to 12, comprising:
moving the second arm (73) towards the first arm (72) to clamp the aircraft assembly (50) between the clamp jaws (75).

14. The method of claim 13 when dependent on claim 9, comprising:
inserting a drilling tool module (100a) into the tool module docking aperture (84) and drilling a hole through the clamped aircraft assembly (50);
removing the drilling tool module from the tool module docking aperture;
inserting a fastening tool module (100b) into the tool module docking aperture to fasten the aircraft assembly; and
moving the second arm (73) away from the first arm (72) to unclamp the aircraft assembly.

15. The method of any one of claims 10 to 14, wherein the aircraft assembly (50) comprises a rib web (52) and a rib post (60) of an aircraft wing box or a rib web and a rib foot (63) of an aircraft wing box.

## Patentansprüche

1. Automatisierte Klemme (70) zum Klemmen eines Rippenstegs (52) an einem Rippenpfosten (60) oder einem Rippenfuß (63) eines Flugzeugflügelkastens, wobei die Klemme Folgendes umfasst:
einen Klemmrahmen (71) mit einem ersten Arm (72) und einem zweiten Arm (73), die sich von der Basis (74) des Klemmrahmens erstrecken, wobei der zweite Arm zum ersten Arm hin und von diesem weg beweglich ist;
einen Roboter-Endeffektor (101a)-Verbinder, der mit dem Klemmrahmen gekoppelt ist;
Klemmbacken (75), die eine erste Backe (76), die an einem distalen Ende des ersten Arms befestigt ist, und eine zweite Backe (77), die an einem fern gelegenen Ende des zweiten Arms befestigt ist, beinhalten, wobei die Klemmbacken dazu ausgelegt sind, einen Rippensteg an einem Rippenpfosten zu klemmen oder einen Rippensteg an einem Rippenfuß zu klemmen;
wobei die erste Backe und/oder die zweite Backe ein Kontaktnormalisierungssystem umfasst, wobei das Kontaktnormalisierungssystem Folgendes umfasst:
einen Backenkörper (101), der relativ zu dem jeweiligen Arm fixiert ist, und
ein Nasenstück (102), das an einer Lagerfläche drehbar mit dem Backenkörper gekoppelt ist, wobei das Nasenstück dazu ausgelegt ist, eine Oberfläche von einem Rippensteg, Rippenpfosten oder Rippenfuß zu berühren, wobei die drehbare Kupplung des Nasenstücks dazu ausgelegt ist, das Nasenstück bei Kontakt mit der Oberfläche passiv relativ zu dem Backenkörper zu drehen, **dadurch gekennzeichnet, dass** die Drehung des Nasenstücks um zwei Achsen senkrecht zu einer Längsachse des Backenkörpers ist.

2. Automatisierte Klemme (70) nach Anspruch 1, wobei die Lagerfläche zwischen einer sphärischen Endfläche (103) des Backenkörpers (101) und einer sphärischen Endfläche (104) des Nasenstücks (102) gebildet ist.

3. Automatisierte Klemme (70) nach Anspruch 2, wobei das Nasenstück (102) eine ebene Endfläche (108) umfasst, die umfangsseitig von der sphärischen Endfläche (104) des Nasenstücks umgeben ist.

4. Automatisierte Klemme (70) nach einem der vorhergehenden Ansprüche, wobei die Klemmbacken (75) zwei oder mehr flexible Elemente (105) umfassen, die dazu ausgelegt sind, das Nasenstück (102) in Richtung des Backenkörpers (101) vorzuspannen.

5. Automatisierte Klemme (70) nach einem der vorhergehenden Ansprüche, wobei das Kontaktnormalisierungssystem eine Verarbeitungseinheit und einen oder mehrere Kontaktsensoren (106) umfasst, die dazu ausgelegt sind, ein Signal an die Verarbeitungseinheit zu senden, das eine Winkelrotation des Nasenstücks (102) relativ zu dem Backenkörper (101) angibt, vorzugsweise
wobei die Kontaktsensoren an dem Backenkörper befestigt sind, wobei die Kontaktsensoren dazu ausgelegt sind, das Nasenstück zu kontaktieren und ein Signal an die Verarbeitungseinheit zu senden, das eine Winkelrotation des Nasenstücks relativ zu dem Backenkörper angibt.

6. Automatisierte Klemme (70) nach Anspruch 5, wobei der eine oder die mehreren Kontaktsensoren (106) jeweils innerhalb des Backenkörpers (101) untergebracht sind.

7. Automatisierte Klemme (70) nach einem der vorhergehenden Ansprüche, wobei das Kontaktnormalisierungssystem zwei oder mehr der Kontaktsensoren (106), die an dem Backenkörper (101) befestigt sind, umfasst, und vorzugsweise drei oder mehr Kontaktsensoren.

8. Automatisierte Klemme (70) nach einem der vorhergehenden Ansprüche, die ein Sichtsystem (93) umfasst, wobei das Sichtsystem eine oder mehrere Bildgebungsvorrichtungen (94) zum Detektieren eines Bezugselements (D) des Rippenstegs (52), des Rippenpfostens (60) oder des Rippenfußes (63) aufweist, vorzugsweise
wobei das Sichtsystem eine erste Bildgebungsvorrichtung beinhaltet, die an dem ersten Arm (72) befestigt ist und eine Sichtlinie (95) aufweist, die in einem spitzen Winkel zu einer Längsachse der Klemmbacken (75) ausgerichtet ist, und/oder das Sichtsystem eine zweite Bildgebungsvorrichtung aufweist, die an dem zweiten Arm (73) befestigt ist und eine Sichtlinie aufweist, die in einem spitzen Winkel zu einer Längsachse der Klemmbacken ausgerichtet ist.

9. Automatisierte Klemme (70) nach einem der vorhergehenden Ansprüche, wobei die erste (76) und/oder die zweite Backe (77) eine Werkzeugmodul-Andocköffnung (84) zum Aufnehmen eines Werkzeugmoduls aufweist, wobei die Werkzeugmodul-Andocköffnung so angeordnet ist, dass sie Zugang zu dem Rippensteg (52) und dem Rippenpfosten (60) oder den Rippenfuß (63) bereitstellt, die zwischen den Klemmbacken (75) eingeklemmt sind.

10. Verfahren zum automatischen Zusammenklemmen von Komponenten einer Flugzeuganordnung (50) unter Verwendung der automatisierten Klemme (70) nach einem der vorhergehenden Ansprüche, wobei das Verfahren Folgendes umfasst:
Positionieren des Nasenstücks (102) in Kontakt mit einer Oberfläche der Flugzeuganordnung, so dass sich das Nasenstück dreht, bis eine Längsachse des Nasenstücks mit einem Normalenvektor der Oberfläche ausgerichtet ist; und Drehen des Backenkörpers (101) relativ zu dem Nasenstück, um eine Längsachse des Backenkörpers auf die Längsachse des Nasenstücks und den Normalenvektor der Oberfläche auszurichten.

11. Verfahren nach Anspruch 10, wenn abhängig von Anspruch 5, umfassend:
Senden eines Signals an die Verarbeitungseinheit, das eine Winkelrotation des Nasenstücks (102) relativ zu dem Backenkörper (101) angibt, um einen Drehwinkel zu bestimmen; und
Drehen des Backenkörpers relativ zu dem Nasenstück entsprechend dem bestimmten Drehwinkel.

12. Verfahren nach Anspruch 10 oder 11, wenn abhängig von Anspruch 8, umfassend:
Bewegen der ersten Backe (76) um einen vorbestimmten Abstand von der Flugzeuganordnung (50) weg;
Kalibrieren des Sichtsystems (93) relativ zu der Flugzeuganordnung basierend auf dem vorbestimmten Abstand; und
Identifizieren eines Bezugselements (D) auf der Flugzeuganordnung mit dem Sichtsystem.

13. Verfahren nach einem der Ansprüche 10 bis 12, umfassend:
Bewegen des zweiten Arms (73) in Richtung des ersten Arms (72), um die Flugzeuganordnung (50) zwischen den Klemmbacken (75) zu klemmen.

14. Verfahren nach Anspruch 13, wenn abhängig von Anspruch 9, umfassend:
Einsetzen eines Bohrwerkzeugmoduls (100a) in die Werkzeugmodul-Andocköffnung (84) und Bohren eines Lochs durch die geklemmte Flugzeuganordnung (50);
Entfernen des Bohrwerkzeugmoduls aus der Werkzeugmodul-Andocköffnung;
Einsetzen eines Befestigungswerkzeugmoduls (100b) in die Werkzeugmodul-Andocköffnung, um die Flugzeuganordnung zu befestigen; und
Bewegen des zweiten Arms (73) von dem ersten Arm (72) weg, um die Flugzeuganordnung zu entklemmen.

15. Verfahren nach einem der Ansprüche 10 bis 14, wobei die Flugzeuganordnung (50) einen Rippensteg (52) und einen Rippenpfosten (60) eines Flugzeugflügelkastens oder einen Rippensteg und einen Rippenfuß (63) eines Flugzeugflügelkastens umfasst.

## Revendications

1. Dispositif de serrage automatisé (70) pour serrer une âme de nervure (52) contre un montant de nervure (60) ou un pied de nervure (63) d'un caisson de voilure d'aéronef, le dispositif de serrage comportant :
une structure de serrage (71) ayant un premier bras (72) et un second bras (73) s'étendant à partir de la base (74) de la structure de serrage, le second bras pouvant être rapproché du premier bras et éloigné de celui-ci ;
un élément de raccordement d'organe effecteur terminal de robot (101a) accouplé à la structure de serrage ;
des mâchoires de serrage (75) comprenant une première mâchoire (76) fixée à une extrémité distale du premier bras, et une seconde mâchoire (77) fixée à une extrémité distale du second bras, les mâchoires de serrage étant conçues pour serrer une âme de nervure contre un montant de nervure ou serrer une âme de nervure contre un pied de nervure ;
la première mâchoire et/ou la seconde mâchoire comprenant un système de normalisation de contact, le système de normalisation de contact comprenant :
un corps de mâchoire (101) fixe par rapport au bras respectif, et
un embout (102) accouplé rotatif au corps de mâchoire au niveau d'une surface d'appui, l'embout étant conçu pour venir en contact avec une surface de l'un de l'âme de nervure, du montant de nervure et du pied de nervure, l'accouplement rotatif de l'embout étant conçu pour faire tourner passivement l'embout par rapport au corps de mâchoire lors du contact avec la surface, **caractérisé en ce que** la rotation de l'embout se fait autour de deux axes perpendiculaires à un axe longitudinal du corps de mâchoire.

2. Dispositif de serrage automatisé (70) selon la revendication 1, dans lequel la surface d'appui est formée entre une surface d'extrémité sphérique (103) du corps de mâchoire (101) et une surface d'extrémité sphérique (104) de l'embout (102).

3. Dispositif de serrage automatisé (70) selon la revendication 2, dans lequel l'embout (102) comprend une surface d'extrémité plane (108) entourée circonférentiellement par la surface d'extrémité sphérique (104) de l'embout.

4. Dispositif de serrage automatisé (70) selon l'une quelconque des revendications précédentes, dans lequel les mâchoires de serrage (75) comprennent au moins deux éléments flexibles (105) conçus pour solliciter l'embout (102) vers le corps de mâchoire (101).

5. Dispositif de serrage automatisé (70) selon l'une quelconque des revendications précédentes, dans lequel le système de normalisation de contact comprend une unité de traitement et un ou plusieurs capteurs de contact (106) conçus pour envoyer à l'unité de traitement un signal indicatif d'une rotation angulaire de l'embout (102) par rapport au corps de mâchoire (101), de préférence
dans lequel les capteurs de contact sont fixés sur le corps de mâchoire, les capteurs de contact étant conçus pour entrer en contact avec l'embout et envoyer un signal à l'unité de traitement indiquant une rotation angulaire de l'embout par rapport au corps de mâchoire.

6. Dispositif de serrage automatisé (70) selon la revendication 5, dans lequel le ou les capteurs de contact (106) sont chacun logés à l'intérieur du corps de mâchoire (101).

7. Dispositif de serrage automatisé (70) selon l'une quelconque des revendications précédentes, dans lequel le système de normalisation de contact comprend au moins deux capteurs de contact (106) fixés au corps de mâchoire (101), et de préférence au moins trois capteurs de contact.

8. Dispositif de serrage automatisé (70) selon l'une quelconque des revendications précédentes, comprenant un système de vision (93), le système de vision ayant un ou plusieurs dispositifs d'imagerie (94) pour détecter un repère (D) de l'âme de nervure (52), du montant de nervure (60) ou du pied de nervure (63), de préférence dans lequel le système de vision comprend un premier dispositif d'imagerie fixé au premier bras (72) et ayant une ligne de vision (95) orientée à un angle aigu par rapport à un axe longitudinal des mâchoires de serrage (75) et/ou le système de vision comprend un second dispositif d'imagerie fixé au second bras (73) et ayant une ligne de vision orientée à un angle aigu par rapport à un axe longitudinal des mâchoires de serrage.

9. Dispositif de serrage automatisé (70) selon l'une quelconque des revendications précédentes, dans lequel la première mâchoire (76) et/ou la seconde mâchoire (77) comportent une ouverture de réception de module d'outil (84) destinée à recevoir un module d'outil, l'ouverture de réception de module d'outil étant conçue pour permettre d'accéder à l'âme de nervure (52) et au montant de nervure (60) ou au pied de nervure (63) serrés entre les mâchoires de serrage (75).

10. Procédé de serrage automatique de composants d'un assemblage d'aéronef (50) au moyen du dispositif de serrage automatisé (70) selon l'une quelconque des revendications précédentes, le procédé comprenant :
positionner l'embout (102) en contact avec une surface de l'assemblage d'aéronef de telle sorte que l'embout tourne jusqu'à ce qu'un axe longitudinal de l'embout s'aligne avec un vecteur normal de la surface ; et
faire tourner le corps de mâchoire (101) par rapport à l'embout afin d'aligner un axe longitudinal du corps de mâchoire sur l'axe longitudinal de l'embout et le vecteur normal de la surface.

11. Procédé selon la revendication 10 lorsqu'elle dépend de la revendication 5, comprenant :
envoyer à l'unité de traitement un signal indiquant une rotation angulaire de l'embout (102) par rapport au corps de mâchoire (101) pour déterminer un angle de rotation ; et
faire tourner le corps de mâchoire par rapport à l'embout en fonction de l'angle de rotation déterminé.

12. Procédé selon la revendication 10 ou 11 lorsqu'elle dépend de la revendication 8, comprenant :
déplacer la première mâchoire (76) de façon à l'éloigner d'une distance prédéterminée de l'assemblage d'aéronef (50) ;
étalonner le système de vision (93) par rapport à l'assemblage d'aéronef en fonction de la distance prédéterminée ; et
identifier un repère (D) sur l'assemblage d'aéronef avec le système de vision.

13. Procédé selon l'une quelconque des revendications 10 à 12, comprenant :
déplacer le second bras (73) vers le premier bras (72) pour serrer l'assemblage d'aéronef (50) entre les mâchoires de serrage (75).

14. Procédé selon la revendication 13 lorsqu'elle dépend de la revendication 9, comprenant :
insérer un module d'outil de perçage (100a) dans l'ouverture de réception de module d'outil (84) et percer un trou à travers l'assemblage d'aéronef (50) serré ;
ôter le module d'outil de perçage de l'ouverture de réception de module d'outil ;
insérer un module d'outil de fixation (100b) dans l'ouverture de réception de module d'outil pour fixer l'assemblage d'aéronef ; et
éloigner le second bras (73) du premier bras (72) pour cesser de serrer l'assemblage d'aéronef.

15. Procédé selon l'une quelconque des revendications 10 à 14, dans lequel l'assemblage d'aéronef (50) comprend une âme de nervure (52) et un montant de nervure (60) d'un caisson de voilure d'aéronef ou une âme de nervure et un pied de nervure (63) d'un caisson de voilure d'aéronef.
